# EUROPEAN PATENT APPLICATION

(11) **EP 4 089 862 A1**
(43) Date of publication of application: **16.11.2022**
(21) Application number: 22169230.4
(22) Date of filing: 21.04.2022
(51) Int. Cl.: H02G 1/04

(54) **IMPROVED HYDRAULIC WINCH**

(30) Priority: 10.05.2021 IT 202100002474 U
(71) Applicant: TESMEC S.P.A., 20123 Milano (MI) (IT)
(72) Inventor: OSCAR, Alberto, 24063 CASTRO (BG) (IT); COLLEONI, Matteo, 24036 PONTE S. PIETRO (BG) (IT)
(74) Representative: Gatti, Enrico

(57) **Abstract**

An improved hydraulic winch (10) for use in operations for stringing a power line which comprises an operating unit (12) that supports a single capstan (16) on which a cable (17) to be strung is wound and moved to a rewinding unit (18) of said winch around which said cable (17) is rewound.

## Description

The present invention relates to an improved hydraulic winch.

More in particular, the present invention relates to a hydraulic winch with rewinder for use in operations for stringing a power line.

As is known, winches are used in operations for stringing hauling ropes and conductors for power lines and, in particular, in traditional stringing operations of a power line that require a "braked" stringing, equipment provided with multiple capstans is used, with said equipment comprising a winch machine that takes up a steel rope with a hauling function and a braking machine that applies a controlled tension to the conductors during stringing, so as to ensure that said conductors remain suspended to the dedicated guide devices provided on intermediate supports without the risk of said conductors sliding on the ground or against obstacles present below these conductors (for example, road or rail crossings, intersection of other power lines, etc.).

Traditionally, equipment with a winch comprise a pair of capstans of the type with offset grooves in which the rope is continuously wound to then be wound on a reel installed inside a device indicated as winder.

In accordance with the known technique, the capstans have a diameter sized in proportion to the maximum diameter of the rope that can be used, with this ratio following the relation "D_{c} = 25*D_{f}" (where D_{c}=Diameter capstan and D_{f}=Diameter rope); the diameter of the capstans is tendentially small and comprised in a range from 250mm to 325mm for equipment with low pulling power (25 or 35 kN) which are used with ropes with a diameter of 10mm or 13mm, respectively.

These diameters of the capstans are small if compared to the diameter of brake or winch-brake equipment, which is normally used to string a new conductor or to recover an old conductor or an earth wire in operations known as "reconductoring"; this equipment has a winding ratio equal to 35 times the diameter of the conductor or equal to 60 times the diameter of the earth wire and, consequently, this equipment comprises capstans that start from a diameter of 660 mm to reach diameters of up to and over 1500 mm.

This winch equipment with relatively low pulling powers is typically known as "service winches" and, besides being used for the recovery of an anti-twist rope, can also be used for the recovery of an old earth wire and/or a conductor with a small diameter compatibly with the diameters and ratios described.

However, the traditional equipment described entail an important drawback linked to the fact that to allow recovery of conductors of small diameter and/or of earth wires, capstans of larger diameter are required with respect to those typically in use (i.e., up to 2.5 times the diameter typically in use - by way of example, applying the parameters described above, for an earth wire with a diameter of 11 mm, capstans with a minimum diameter of 660 mm would be required, whereas for a conductor with a diameter of 18 mm capstans with a minimum diameter of 630 mm would be required).

In order to solve this drawback, a known solution is represented by an increase of the diameter of the capstans.

However, also this solution entails the important drawbacks linked to the fact that an increase in the diameters of the capstans causes a consequent radical change of the dimensions and of the weights of traditional winches and, therefore, also of their design.

The object of the present invention is to overcome the aforesaid drawbacks.

More in particular, an object of the present invention is to provide an improved hydraulic winch that allows the use of capstans of larger diameter compared to those traditionally used on winches provided with a winder without varying the dimensions and weights of these winches.

A further object of the present invention is to provide an improved winch that does not require the use of an operator to control the branch of the rope coming out of the capstan on the opposite side to line pulling of the rope.

A further object of the present invention is to provide an improved winch that increases the safety of the operator.

A further object of the present invention is to provide a winch that allows a greater length of rope to be stored or recovered on the reel with respect to the length that characterises the traditional winches.

A further object of the present invention is to provide users with an improved hydraulic winch designed to ensure high efficiency and durability over time and, furthermore, such as to be able to be easily and inexpensively manufactured.

These and other objects are achieved by the present invention, which has the characteristics set forth in claim 1.

According to the present invention there is provided an improved hydraulic winch for use in operations for stringing a power line that comprises an operating unit movable on wheels, which can be stabilised on the ground through blocking means or supporting feet, a single capstan supported by said operating unit and wound on which is a cable to be strung and moved to a rewinding/unwinding unit of said winch around which said cable is rewound/unwound.

Advantageous embodiments of the present invention appear in the dependent claims.

The constructive and functional characteristics of the improved hydraulic winch of the present invention will be better understood from the detailed description below in which reference will be made to the accompanying drawings which illustrate a preferred and non-limiting embodiment thereof, and wherein:
Fig. 1 illustrates a schematic axonometric view of the improved hydraulic winch of the invention;
Fig. 2 illustrates a schematic side view of the hydraulic winch of the present invention;
Fig. 3 illustrates a schematic top view of the hydraulic winch of the present invention;
Fig. 4 illustrates a schematic enlarged detail view of a portion of Fig. 3;
Fig. 5 represents a cross-sectional view according to a plane A-A indicated in Fig. 3.

The improved hydraulic winch of the present invention, indicated as a whole with 10 in the aforesaid figures, comprises an operating unit 12 movable on wheels 14 and which can be stabilised on the ground (in conditions of use) through blocking means or supporting feet 15 and which supports a capstan 16 on which a cable 17 to be strung is wound and a rewinding/unwinding unit 18 around which the cable 17 is rewound or unwound (with said rewinding/unwinding unit 18 which can be connected directly to the operating unit 12 and rotatably supported thereby or it can be defined by an external unit separated from the operating unit 12 and hydraulically powered thereby by means of a dedicated circuit and connection pipes).

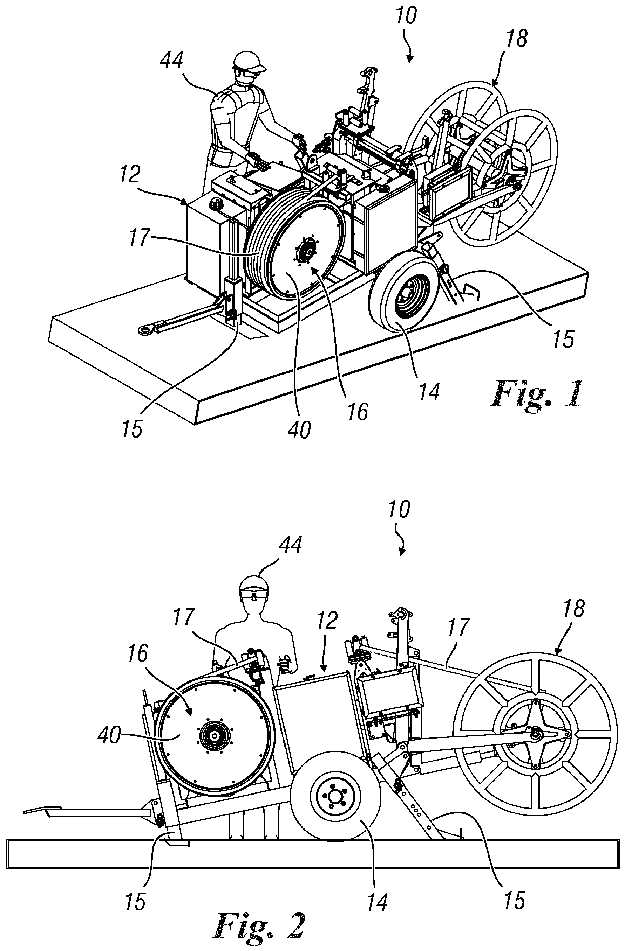

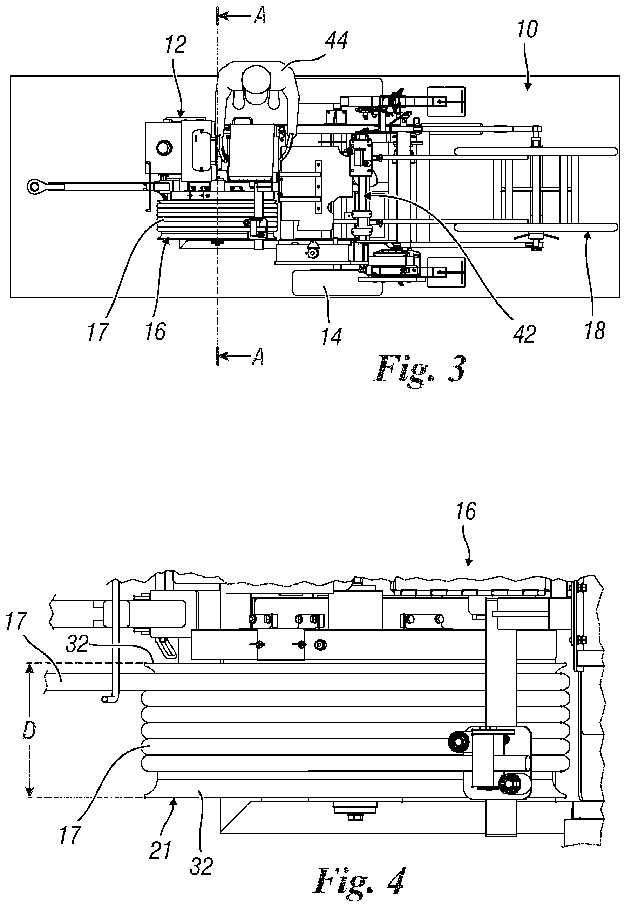

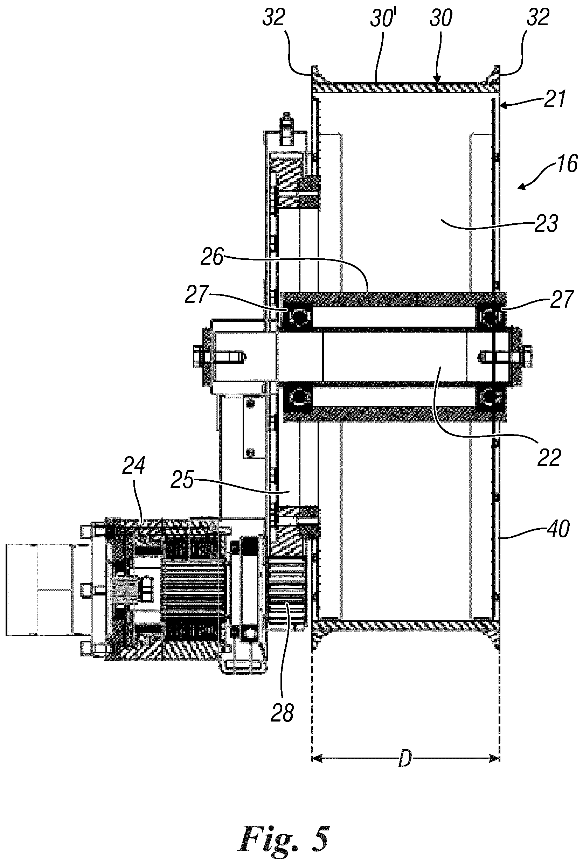

The one and only capstan 16 of the winch 10 of the present invention is defined by a wheel 21 with radial spokes 23 connected with one end to a central hub 26 and with the opposite end to an annulus 30 (as shown schematically in Fig. 5 - in the preferred embodiment of Figs. 1 to 5, the wheel 21 of the capstan 16 comprises a rim or front plate 40 to protect the same wheel); the central hub 26 is arranged rotatable, by means of bearings 27, on a fixed shaft 22 of the operating unit 12 and takes the movement from a hydraulic motor 24 to which the central hub 26 of the capstan 16 is connected by means of a toothed wheel 25 fitted on the metal structure of the capstan formed by radial spokes (23) and by the central hub (26) and which meshes with a pinion 28 that takes the movement from the hydraulic motor 24.

The annulus 30 of the wheel 21 of the capstan develops transversely for a width "D" to define a flat surface 31' from the outer edges of which opposite and parallel protruding appendages 32 develop circumferentially according to a direction perpendicular to that of said flat surface; the flat surface 31' of the annulus 30 defines a surface for accommodating a rope 17 wound in multiple turns on the capstan 16 and the opposite and parallel protruding appendages 32 define lateral containing means for said wound turns of the rope 17.

The winch according to the present invention comprises intermediate means between the capstan 16 and the rewinding/unwinding unit 18 with the function of guiding the rope 17 coming out of the capstan in the direction of the rewinding/unwinding unit; said intermediate means comprise a rope winder 42 of automatic type that comprises a roller unit sliding in a direction perpendicular to the direction of feed of the rope 17 facilitating winding thereof with a controlled rate.

The movement of said rope winder 42 is automatic and a function of the rotation of the reel of rope so as to have a specific movement of the rope winder for each revolution of the reel of rope 17.

The winch of the present invention as described above is controlled by a single operator 44 who acts by operating a mechanical lever (not represented) functional to managing the speed and a hydraulic valve (not represented) for limiting and controlling the pull applied to the rope 17; the data relative to winch operation are displayed on a screen or control panel provided with instrumentation, either analogue or digital as a function of the types of control systems produced.

As can be seen from the above, the advantages achieved by the improved hydraulic winch of the present invention are evident.

The improved hydraulic winch of the present invention allows an advantageous use in reconductoring operations of earth wires or of ropes of small diameter on overhead transmission or distribution lines and typically in the maintenance of power lines.

A further advantage of the winch of the present invention is represented by the fact that it allows a use of capstans of larger diameter with respect to those traditionally used on winches provided with winder without the need to vary the dimensions and weights of these winches.

A further advantage is represented by the fact that with the winch of the present invention it is not necessary to use an operator with the function of controlling the branch of the rope coming out of the capstan on the side opposite to line pulling of the rope.

A further advantage is represented by the fact that the winch of the present invention with automatic rewinder completely eliminates the need for intervention of the operator with a consequent improvement of the working and safety conditions of the same operator.

Also advantageous is the fact that the hydraulic winch of the present invention allows a greater length of rope to be stored or recovered on the reel with respect to the length that is typically managed manually and by storing the rope on the ground.

Also advantageous is the fact that the rewinding unit is fed directly by the operating unit of the winch (also in the case in which the rewinding unit is not installed directly, but defines a separate external unit); a winch thus configured operates in a combined, controlled and safe manner.

Although the present invention has been described above with particular reference to an embodiment thereof provided purely by way of non-limiting example, numerous modifications and variants will be apparent to a person skilled in the art in the light of the description set forth above. Therefore, the present invention intends to embrace all the modifications and the variants that fall within the scope of the appended claims.

## Claims

1. An improved hydraulic winch (10) for use in operations for stringing a power line **characterised in that** it comprises an operating unit (12) that supports a single capstan (16) on which a cable (17) to be strung is wound and moved to a rewinding unit (18) of said winch around which said cable (17) is rewound.

2. The hydraulic winch according to claim 1, **characterised in that** the capstan (16) comprises a wheel (21) with radial spokes (23) connected with one end to a central hub (26) and with the opposite end to an annulus (30), said central hub (26) being a means for fitting the capstan on a fixed shaft (22) of the operating unit (12) and the annulus (30) being a means for winding the rope (17) in multiple turns.

3. The hydraulic winch according to claim 2, **characterised in that** the annulus (30) comprises a transversal development for a width "D" to define a flat surface (30') from the outer peripheral edges of which opposite and parallel protruding appendages (32) develop circumferentially according to a direction perpendicular to that of said flat surface, with said flat surface (30') of the annulus (30) defining a surface for accommodating a rope (17) wound in multiple turns with the opposite and parallel protruding appendages (32) defining lateral containing means for said wound turns of the rope (17).

4. The hydraulic winch according to claim 2, **characterised in that** the wheel (21) of the capstan (16) is operated in rotation by means of a hydraulic motor (24) to which the central hub (26) of the capstan (16) is connected by means of a toothed wheel (25) fitted on the metal structure of the capstan formed by the radial spokes (23) and by the central hub (26) and which meshes with a pinion (28) of the hydraulic motor (24).

5. The hydraulic winch according to the preceding claims, **characterised in that** it comprises an intermediate means between the capstan (16) and the rewinding unit (18) functional to guiding the rope (17) coming out of the capstan in the direction of the rewinding unit.

6. The hydraulic winch according to claim 5, **characterised in that** the intermediate means between the capstan (16) and the rewinding unit (18) comprises a rope winder (42) comprising a roller unit that slides in a direction perpendicular to the direction of feed of the rope (17).

7. The hydraulic winch according to claim 6, **characterised in that** the movement of the rope winder (42) is of automatic type and a function of the rotation of the reel for a specific movement of said rope winder for each revolution of the reel of rope (17).

8. The hydraulic winch according to one or more of the preceding claims, **characterised in that** the rewinding unit (18) is connected directly to the operating unit (12) and is rotatably supported thereby.

9. The hydraulic winch according to one or more of the preceding claims, **characterised in that** the rewinding unit (18) defines an external unit separate from the operating unit (12) and hydraulically powered thereby by means of a dedicated circuit and connection pipes.

10. The hydraulic winch according to one or more of the preceding claims, **characterised in that** the operating unit (12) is movable on wheels (14) and can be stabilised on the ground through blocking means or supporting feet (15).
